Europäisches Patentamt

European Patent Office

Office européen des brevets

(11) Veröffentlichungsnummer: **0 051 865
B1**

(19)

# EUROPÄISCHE PATENTSCHRIFT

(12)

(45) Veröffentlichungstag der Patentschrift:
16.07.86

(21) Anmeldenummer: 81109536.3

(22) Anmeldetag: 05.11.81

(51) Int. Cl.⁴: **F 16 L  59/14,** F 17 C  13/00,
E 04 B  1/76

(54) **Wärmedämmung.**

(30) Priorität: 10.11.80  DE 3042374

(43) Veröffentlichungstag der Anmeldung:
19.05.82 Patentblatt 82/20

(45) Bekanntmachung des Hinweises auf die Patenterteilung:
16.07.86 Patentblatt 86/29

(84) Benannte Vertragsstaaten:
AT BE CH FR GB IT LI LU NL SE

(56) Entgegenhaltungen:
FR - A - 2 328 159
US - A - 3 695 483
US - A - 3 760 971
US - A - 3 931 424

(73) Patentinhaber: KAEFER Isoliertechnik GmbH & Co.
Kommanditgesellschaft,
Bürgermeister-Smidt-Strasse 70, D-2800 Bremen 1 (DE)

(72) Erfinder: Tuzinsky, Wolfgang, Dr., Colmarer Strasse 9,
D-2800 Bremen (DE)
Erfinder: Kuhn, Norbert, Heiligenbergstrasse 17,
D-2860 Osterholt-Scharmbeck (DE)

(74) Vertreter: Schwabe, Hans-Georg, Dipl.-Ing. et al,
Patentanwälte Schwabe, Sandmair, Marx
Stuntzstrasse 16, D-8000 München 80 (DE)

**Beschreibung**

Die Erfindung betrifft eine Wärmedämmung oder, genauer gesagt, eine in hohem Masse wärmedämmende Umhüllung bzw. Auskleidung nach dem Oberbegriff des Anspruchs 1. Wenn in diesem von grossen Temperaturintervallen gesprochen wird, so sind damit solche in der Grössenordnung von 100 K gemeint, die also beispielsweise bei 50 oder 200 K liegen können. Die niedrigen Temperaturen, für welche die Wärmedämmung nach der Erfindung in erster Linie bestimmt ist, sind solche, die unter etwa 300 K liegen. Dementsprechend eignet sich die Wärmedämmung nach der Erfindung beispielsweise für die Isolierung von Kühlhäusern, von Tanks für die drucklose Aufbewahung von flüssigem Erdgas und was dergleichen mehr ist.

Wärmedämmungen für grosse Temperaturintervalle bei niedrigen Temperaturen befinden sich in der Regel auf der warmen Seite auf Umgebungstemperatur, die im Bereich von 300 K liegt, aber je nach den Klimaverhältnissen auch recht hoch oder recht niedrig sein kann, und auf der kalten Seite auf einer entsprechend niedrigen Temperatur. Gefertigt werden derartige Wärmedämmungen normalerweise bei Raumtemperatur. Das bringt beim Abkühlen der Wärmedämmung auf einer Seite entsprechend hohe Spannungen in der Wärmedämmung mit sich. Das ist insbesondere dann störend, wenn das wärmegedämmte Objekt auf der kalten Seite nicht ständig auf niedriger Temperatur gehalten bleibt, wie dies z.B. bei einem Tank für flüssiges Erdgas der Fall ist, der gelegentlich auch entleert wird.

Diese Spannungen resultieren daraus, dass die Wärmedämmung sich bei Benützung des isolierten Objektes auf der kalten Seite entsprechend zusammenzieht, während sie auf der warmen Seite im wesentlichen das Volumen behält, dass sie bei der Montage hatte. Diese Spannungen sind auch dann vorhanden, wenn man die Wärmedämmung – wie dies auch bei der Erfindung der Fall ist – verhältnismässig dick macht, ihr also eine Gesamtdicke von beispielsweise 100 bis 300 mm gibt.

Da bei den in der Praxis verwendeten Schaumstoffschichten die Bruchdehnung, also die Längenänderung, bei welcher der Schaumstoff reisst, mit sinkender Temperatur abnimmt, besteht bei den Wärmedämmungen für tiefe Temperaturen die Gefahr, dass von der kalten Seite her Risse in der Schaumstoffschicht entstehen. In diesen Rissen können dann Konvektionsströmungen auftreten, da Schaumstoffdämmungen in der Regel nicht unter Vakuum stehen. Um das Entstehen solcher Risse unter dem Einfluss der Kontraktionsspannungen durch Abkühlung der kälteren Schicht der Dämmung zu vermeiden, hat man schon die kälteste Schicht aus einer Mehrzahl von einzelnen Platten zusammengesetzt und in die Fugen zwischen diesen Platten ein elastisches Isoliermaterial eingebracht. So ist es bekannt, dass man diese Fugen mit Mineralwolle oder einem ähnlichen Material ausstopfen kann, welches auch bei tiefen Temperaturen elastisch genug ist, um sich beim Breiterwerden der Fugen durch Schrumpfung der Schaumstoffplatten entsprechend auszudehnen, so dass die Fugen ausgefüllt bleiben.

Macht man die einzelnen Plattenelemente zwischen den mit elastischem Isoliermaterial ausgefüllten Fugen klein genug, so lässt sich hierdurch die Gefahr von Rissen aufgrund von Temperaturspannungen in den Plattenelementen vermeiden. Ein solches Vorgehen hat jedoch den wesentlichen Nachteil, dass die Herstellung ausserordentlich aufwendig wird und dass die Dämmwirkung im die Fugen ausfüllenden Material in der Regel wesentlich schlechter ist.

Ein weiterer wesentlicher Nachteil dieser Ausbildung der kältesten Schicht bzw. Schichten liegt darin, dass in den mit Mineralwolle gefüllten Fugen zwischen den einzelnen Platten dieser Schicht bzw. Schichten der Wärmeübergang grösser ist als in dem Schaumstoffmaterial der Platten selbst. Mit anderen Worten: Macht man die einzelnen Platten klein, so wird die Wärmedämmwirkung wesentlich schlechter, was wiederum dazu führt, dass die Wärmedämmung selbst dicker ausgebildet werden muss. Hierdurch wird wiederum die Fertigung aufwendiger.

Die Erfindung schafft eine Wärmedämmung nach dem Oberbegriff des Anspruchs 1, welche es erlaubt, trotz niedriger Temperatur auf der kalten Seite und eines relativ grossen Temperaturintervalls Wärmedehnungsrisse in der gefährdeten kältesten Schicht der Wärmedämmung zu vermeiden, ohne dass die die kälteste Schicht bzw. die kältesten Schichten der Wärmedämmung bildenden Schaumstoffplatten besonders klein gehalten werden müssten.

Die Ausbildung gemäss dem kennzeichnenden Teil des Anspruchs 1 erlaubt es trotz niedriger Temperaturen und grossen Temperaturintervalls, mit weitaus grösseren Fugenabständen in der kältesten Schicht bzw. den kältesten Schichten auszukommen. Das wird dadurch bewirkt, dass die jeweils wärmere Schicht die benachbarte kältere Schicht nicht mehr am Schrumpfen hindern kann, weil die Zwischenschicht praktisch keine Schubspannungen mehr übertragen kann. Der Effekt der in sich nachgiebigen Zwischenschicht lässt sich bei nicht räumlicher, sondern ebener Betrachtung mit der Anordnung einer Schubspannungen nicht mehr übertragenden Schicht in einem gebogenen Stab vergleichen, wo durch die Schicht ebenfalls eine weitaus stärkere Biegung des Stabes ohne Brechen desselben ermöglicht wird als wenn der Stab aus homogenem Material bestünde bzw. aus Streifen solchen Materials schubspannungsübertragend zusammengesetzt wäre.

Die in sich nachgiebige Schicht muss natürlich auch bei der herrschenden, relativ niedrigen Temperatur noch flexibel sein.

Wenn nicht konstruktive Gründe dafür sprechen, die Platten zwischen den ausgefüllten Fugen in der einen Richtung geringer zu dimensionieren als in der anderen, gibt man diesen Platten zweckmässig quadratische Form, da hierdurch die auftretenden Spannungen in beiden senkrecht zueinander stehenden Richtungen der Plattenebene am geringsten bleiben. Theoretisch ist die Sechseckform am günstigsten, da sie der Kreisform am meisten angenähert ist und dennoch ein lückenloses Bedecken einer Ebene erlaubt. In den meisten Fällen wird man jedoch der Einfachheit halber die quadratische Form bevorzugen.

Die gemäss Anspruch 2 für die Schaumstoffschichten bevorzugten Schaumkunststoffe zeichnen sich durch niedriges Gewicht bei feinem geschlossenporigem Aufbau und damit hoher Wärmedämmung trotz verhältnismässig geringen Gestehungsaufwandes aus. Bevorzugt wird für tiefere Temperaturen Polyurethanschaum, da dieser gegenüber verschäumtem Polystyrol eine bessere Wärmedämmung und erheblich höhere Festigkeitswerte aufweist.

Die in sich nachgiebige Zwischenschicht ist vorzugsweise gemäss Anspruch 3 ausgebildet. Kunststoffweichschaum eignet sich, sofern die Temperatur im Bereich der Zwischenschicht, die ja schon erheblich höher liegt als die Temperatur an der kalten Aussenseite der Wärmedämmung, nicht wesentlich unter 220 K liegt. Hier wird vorteilhaft Siliconschaum eingesetzt. Dieser hat den Vorteil eines im wesentlichen isotropen Aufbaus. Ebenfalls geeignet ist elastifizierter Polystyrolschaum, der auch noch für tiefere Temperaturen einsetzbar ist. Er wird hergestellt, indem Polystyrolschaum in einer Richtung zusammengedrückt wird und danach sich wieder entspannen kann. Da dieser elastifizierte Polystyrolschaum seine Elastizität im wesentlichen nur in einer Richtung, nämlich in der Richtung des Zusammendrückens hat, ist bei Verwendung desselben für die in sich nachgiebige Zwischenschicht darauf zu achten, dass die dünnen Scheiben aus elastifiziertem Polystyrolschaum, welche die in sich nachgiebige Zwischenschicht bilden, so aus dem elastifizierten Polystyrolschaumblock herausgeschnitten sind, dass die Richtung der grössten Verformung mit der Richtung der stärksten Elastifizierung zusammenfällt.

Ferner ist es in diesem Falle wesentlich, dass die Richtung, in welcher der elastifizierte Polystyrolschaum seine grösste Elastizität besitzt, im wesentlichen jeweils mit der Richtung zur Mitte der auf der kalten Seite der in sich nachgiebigen Zwischenschicht befindlichen Kunststoffplatte hin erstreckt.

Bei der Erfindung sind auch zweckmässig die Fugen zwischen den einzelnen Platten der kälteren Schicht bzw. Schichten mit Siliconschaum oder elastifiziertem Polystyrolschaum ausgefüllt, da dieser eine geringere Wärmeleitfähigkeit hat als die hierfür bisher verwendeten Mineralwollmaterialien. Auch hier ist darauf zu achten, dass die Richtung der grössten Elastizität bei elastifiziertem Polystyrolschaum hierbei senkrecht zur Ebene der Fuge verläuft.

Für die stoffschlüssige Verbindung wird die Ausbildung gemäss Anspruch 4 als am einfachsten und überall leicht herstellbar bevorzugt.

Bevorzugt ist die in sich nachgiebige Zwischenschicht gemäss Anspruch 5 ausgebildet. In diesem Fall erstreckt sich dann im Idealfall das die Fugen füllende elastische Dämmaterial durch die in sich nachgiebige Zwischenscicht hindurch bis an die Oberfläche der nächstwärmeren Schaumstoffschicht. Um die Spannungen im Bereich des Fugenanschlusses in der in sich nachgiebigen Zwischenschicht nicht zu gross werden zu lassen, kann man die in sich nachgiebige Zwischenschicht dort unterbrechen, indem man z.B. den Raumbereich, der sowohl der in sich nachgiebigen Zwischenschicht als auch der Fuge angehört, mit Mineral- oder Glaswolle füllt, die keine Spannung überträgt oder die in sich nachgiebige Zwischenschicht längs der Fugen z.B. durch einen Schnitt zertrennt und darauf achtet, dass das die Fugen füllende Material mit der in sich nachgiebigen Zwischenschicht und der nächstwärmeren Schaumstoffschicht nicht stoffschlüssig verbunden ist.

Der freien Kontraktion der Platten der kältesten Schicht bzw. Schichten wird durch die in sich nachgiebige Zwischenschicht besonders wenig Widerstand entgegengesetzt, wenn die Ausbildung gemäss Anspruch 6 getroffen ist. In die so entstehenden Hohlräume der in sich nachgiebigen Zwischenschicht werden dann zweckmässig lose entsprechend dünne Scheiben aus dem gleichen Werkstoff wie die hauptsächlich die Wärmedämmung bildenden Schaumstoffschichten eingelegt. Besser noch werden diese Hohlräume mit leicht verdichteter Mineralwolle gefüllt.

Die Erstreckung der längs der Ränder der einzelnen Platte verlaufenden Rahmen senkrecht zum entsprechenden Rand kann vorteilhaft 1 bis 8% des Umfangs der entsprechenden Platte betragen.

Für die Dicke der in sich nachgiebigen Zwischenschicht bzw. Schichten wird die Ausbildung gemäss Anspruch 7 bevorzugt. Eine wesentliche geringere Dicke kann dazu führen, dass unerwünscht hohe Schubspannungen übertragen werden. Eine zu grosse Dicke lässt die schlechtere Wärmedämmfähigkeit bzw. die höheren Gestehungskosten des Werkstoffs für die in sich nachgiebige Zwischenschicht zu stark in Erscheinung treten.

In vielen Fällen, insbesondere dann, wenn die wärmere der durch die Zwischenschicht verbundenen Schichten aus zu einer einzigen Schicht verklebten Platten besteht oder mit einer festen tragenden Schicht verbunden ist, wird eine Ausbildung gemäss Anspruch 8 bevorzugt.

Die Ausbildung nach Anspruch 9 hat den Vorteil des geringeren Fertigungsaufwandes und der besseren Wärmedämmung gegenüber einer Ausbildung auch der dünneren Schicht mit ausgefüllten Fugen.

Ist die zu isolierende, die Isolierung tragende Oberfläche die wärmere, so ist die Ausbildung vorteilhaft nach Anspruch 10 getroffen; ist die zu isolierende Oberfläche jedoch die kältere, wird die Wärmedämmung vorteilhaft gemäss Anspruch 11 ausgebildet.

Es versteht sich, dass die oben dargelegten verschiedenen Massnahmen für den Fachmann je nach den Gegebenheiten in technisch sinnvollem Rahmen auch miteinander kombiniert werden können.

Nachfolgend ist die Erfindung anhand von in den schematischen Zeichnungen gezeigten Beispielen näher erläutert:

Fig. 1 zeigt perspektivisch im Schnitt einen Teil eines Windkanals, der für den Betrieb mit sehr kalten Gasen innen mit einer Wärmedämmung nach der Erfindung versehen ist.

Fig. 2 zeigt in gegenüber Fig. 1 vergrössertem Massstab einen Teil der Schnittfläche aus Fig. 1.

Fig. 3 und 4 zeigen weitere Ausführungsbeispiele für Wärmedämmungen gemäss der Erfindung in ähnlicher Darstellung wie Fig. 2.

Fig. 5 zeigt perspektivisch eine Schaumstoffplatte zur Bildung einer Wärmedämmung gemäss Anspruch 6.

Fig. 6 bis 8 zeigen vorteilhafte Ausführungen des Stosses zwischen der Zwischenschicht und den Fugen.

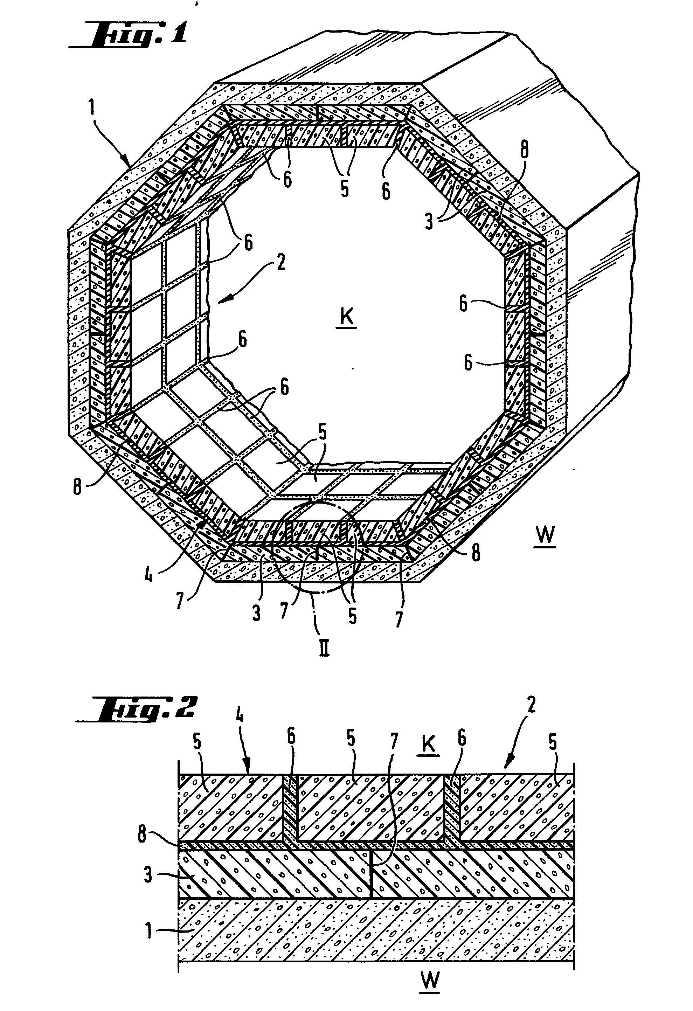

Der in Fig. 1 gezeigte Windkanal besteht im wesentlichen aus einer in sich geschlossenen Betonröhre 1, welche regelmässig achteckigen Querschnitt aufweist und etwa die Form eines Kettengliedes einer Rundkette besitzt. Da der Windkanal, der beispielsweise eine mittlere lichte Weite von 10 m aufweist, für bestimmte Zwecke mit einem Gas betrieben werden muss, dessen Temperatur bis auf 100 K abgesenkt sein kann, ist die den Kanal bildende Betonröhre 1 innen mit einer Wärmedämmung 2 versehen. Diese muss gewährleisten, dass die Innenoberfläche der Betonröhre gegenüber der Aussenoberfläche eine Temperaturdifferenz von höchstens 3 K aufweist. Die Wärmedämmung 2 ist zweischichtig ausgebildet. Sie besitzt eine äussere Schicht aus PU-Schaumplatten 3 von einer für derartige Wärmedämmzwecke üblichen Art. Diese Platten 3 sind einerseits mit dem Beton der Röhre 1 verklebt. An ihren Rändern 7 sind sie auch miteinander verklebt, so dass hier eine fest mit der Betonröhre 1 verbundene Schicht vorliegt, die auch in sich geschlossen ist. Die äussere PU-Schaumschicht 3 hat eine Dicke von 10 cm.

Innerhalb der PU-Schaumschicht 3 befindet sich eine zweite PU-Schaumschicht 4, die aus einzelnen PU-Schaumplatten 5 besteht. Die PU-Schaumplatten 5 haben jeweils eine Dicke von 15 cm. Die Platten sind vorzugsweise quadratisch bei einer Kantenlänge in der Grössenordnung von 90 cm. Zur Anpassung an die Quererstreckung der einzelnen ebenen Teile der Betonröhre 1 kann hier von der quadratischen Fläche auch durch Verkürzung einer Kante abgewichen sein (Die Zeichnung ist nicht massstäblich). Wie aus der Zeichnung ersichtlich, erstreckt sich zwischen den beiden PU-Schaumschichten 3 und 4 eine in sich nachgiebige Zwischenschicht 8, die aus elastifizierten Polystyrolschaumscheiben besteht, deren Dicke im Beispiel 30 mm beträgt. Bei Verwendung des aufwendigen Silikonschaums kann die Dicke der Zwischenschicht auf die Hälfte bis ein Drittel reduziert werden. Die Scheiben aus elastifiziertem Polystyrolschaum sind so geschnitten, dass ihre höchste Elastizität in einer Richtung senkrecht zur Ebene der Schicht 8 liegt. Die in sich nachgiebige Zwischenschicht 8 ist sowohl mit der Schaumstoffschicht 3 als auch der Schaumstoffschicht 4 mittels eines hierfür üblichen und bekannten Klebers verklebt.

Wie aus der Zeichnung ersichtlich, sind die PU-Schaumplatten 5 mit Fugen 6 verlegt, deren Dicke grösser ist als die der Schicht 8, also beispielsweise 100 mm beträgt und die ebenfalls mit elastifiziertem Polystyrolschaum unter Berücksichtigung von dessen Anisotropie ausgefüllt sind.

Es versteht sich, dass eine Wärmedämmung nach der Erfindung nicht notwendig aus ebenen Elementen zusammengesetzt sein muss. Der Einfachheit halber wird man dies in der Praxis jedoch bevorzugen.

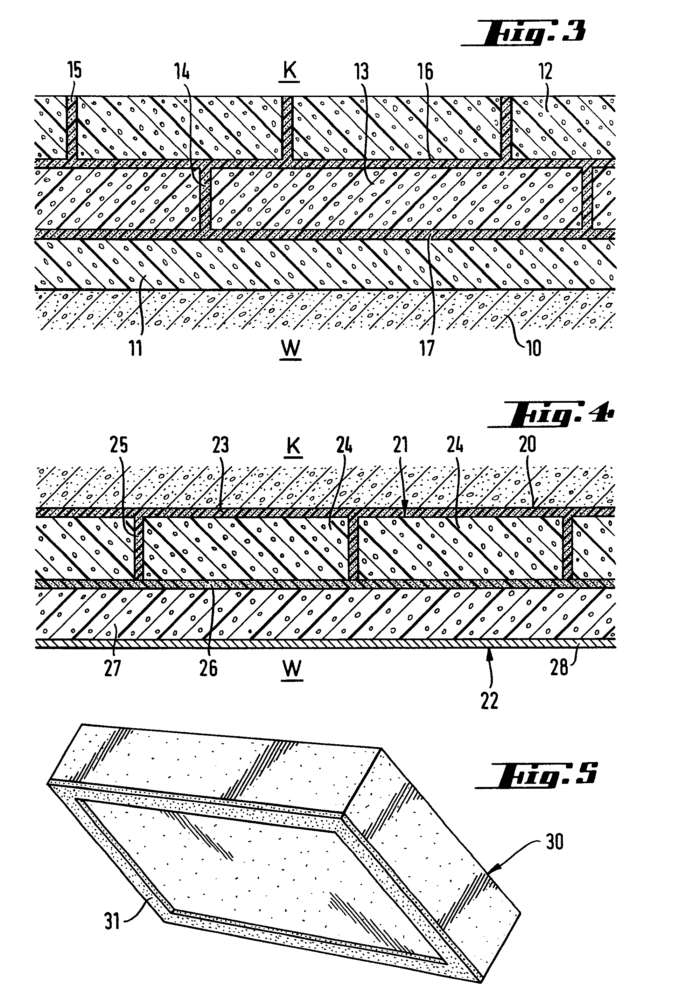

Die in Fig. 3 gezeigte Wärmedämmung ist auf eine warme Oberfläche 10 von Raumtemperatur aufgeklebt. Sie unterscheidet sich von der Wärmedämmung gemäss Fig. 1 im wesentlichen dadurch, dass neben der dünneren warmen Schicht 11 und der dickeren kalten Schicht 12 eine mittlere, ebenfalls dicke Schicht 13 aus PU-Schaumplatten vorgesehen ist. Die Fugen 14 und 15 in den Schichten 12 und 13 sowie die in sich nachgiebigen Zwischenschichten 16 und 17 zwischen der mittleren Schicht und den beiden äusseren Schichten sind hier mit Siliconweichschaum gefüllt, der allseitig mit den entsprechenden Oberflächen der Schichten 11, 12 und 13 sowie der Fugen 14 und 15 zwischen den Platten der Schichten 12 und 13 verklebt ist.

Um eine einwandfrei geschlossene Oberfläche der Wärmedämmung gemäss der Erfindung auch bei sehr grossen Temperaturdifferenzen zwischen der Innenseite und der Aussenseite der Wärmedämmung zu ermöglichen, können die Fugen zwischen den Platten vorzugsweise nur der kältesten Schicht 4 bzw. 12 zur kalten Oberfläche hin in in der Zeichnung nicht gezeigter Weise konisch divergieren, so dass dort, wo die grösste Kontraktion der Platten zu erwarten ist, in den Fugen auch eine entsprechend dicke Schicht aus in sich nachgiebigem Isoliermaterial vorhanden ist, die dementsprechend auch mehr nachgeben kann.

Bei den beiden zuvor beschriebenen Beispielen ist jeweils die kalte Oberfläche der Wärmedämmung freiliegend.

Bei dem Beispiel gemäss Fig. 4 ist dies nicht der Fall. Hier ist die kalte Oberfläche 20 eines Behälters für flüssiges Erdgas nach aussen isoliert. Da hier die kälteste Oberfläche der aus zwei PU-Schaumschichten 21 und 22 gebildeten Wärmedämmung liegt, ist zwischen der der kalten Oberfläche 20 zugekehrten PU-Schaumschicht 21 und der Oberfläche 20 eine dünne, z.B. 30 mm starke Lage 23 aus elastifiziertem Polystyrolschaum oder Asbestschaum vorgesehen, die sowohl mit der Oberfläche 20 als auch mit den entsprechenden Oberflächen der die Lager 21 bildenden PU-Schaumplatten 24 verklebt ist. Die PU-Schaumplatten 24 lassen zwischen sich Fugen 25 frei, die ebenfalls mit elastifiziertem Polystyrolschaum gefüllt sind, der mit den anstossenden Oberflächen der Platten 24 verklebt ist. Auf der warmen Seite der Schicht 21 erstreckt sich eine weitere dünne Schicht 26, die hier wegen der höheren Temperatur auch aus weichem Siliconschaum bestehen kann und einerseits mit den Platten 24 und anderseits mit den die Schicht 22 bildenden Platten 27 verklebt ist. Die Platten 27 sind an ihren Rändern miteinander zu einer geschlossenen Haut verklebt. Aussen ist die Wärmedämmung noch mit einem Schutzmantel 28 aus Stahlblech versehen, der die Isolierung von aussen, also von der warmen Seite her, gegen mechanische Beschädigung schützt und an der Wärmedämmung nur anliegt, mit dieser also nicht verklebt ist.

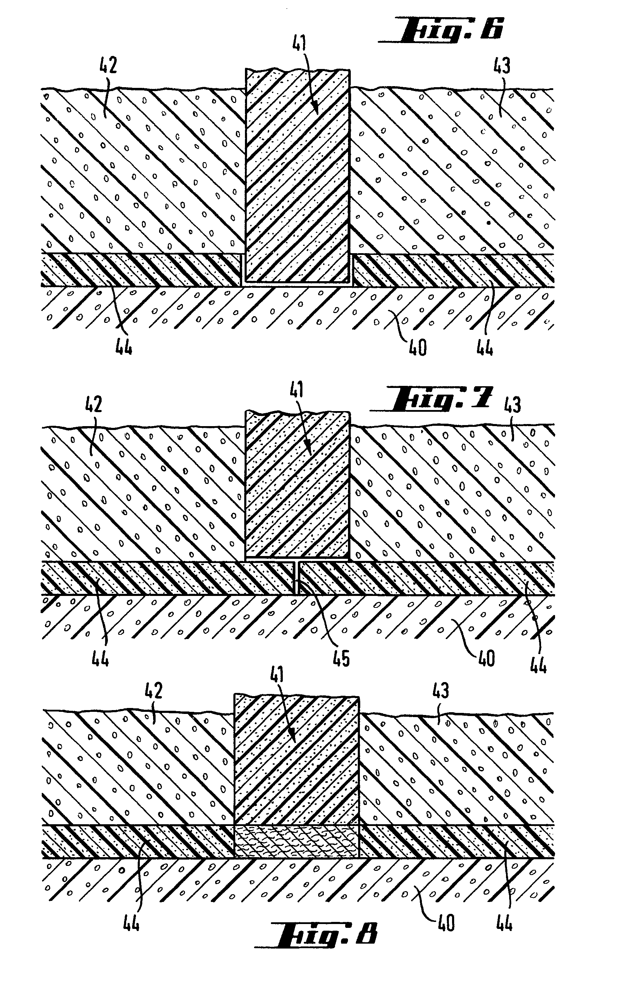

Um die Fertigung zu erleichtern, wird man vielfach die die kältere Schicht bzw. die kälteren Schichten bildenden Platten bereits auf einer Seite mit einer Lage von flexiblem Isoliermaterial bekleben, so dass bei der Montage nur noch solche vorgefertigten Platten mit bereits an ihnen befindlicher in sich nachgiebiger Isolierschicht aufgeklebt werden müssen. Die Isolierschicht kann sich dabei über die ganze entsprechende Fläche der Platte erstrecken, die im übrigen auch bereits an zwei aneinanderstossenden Seiten mit dem zum Ausfüllen der Fuge dienenden, je nach den Gegebenheiten in sich nachgiebigem oder aber auch elastischem Isoliermaterial beklebt sein kann. Eine für viele Zwecke vorteilhafte Ausführungsform einer solchen Platte ist in Fig. 5 gezeigt. Hier ist die ebenfalls aus PU-Schaum gebildete Isolierplatte 30 auf ihrer mit der benachbarten Schicht zu verklebenden Seite nicht vollständig mit einer Zwischenschicht aus in sich nachgiebigem Material verklebt. Die Schicht aus in sich nachgiebigem Material hat hier vielmehr die Form eines Rahmens 31, der längs der Ränder der Platte 30 verläuft. Auf diese Weise entstehen im Inneren der fertigen Wärmedämmung nach ihrer Montage eine Vielzahl flacher Hohlräume, die vorteilhaft mit Mineralwolle ausgefüllt sein können.

Wenn oben davon gesprochen ist, dass die Schaumstoffschicht durch Zwischenschichten aus in sich nachgiebigem Material getrennt sein sollen, so soll dieses in sich nachgiebige Material natürlich grundsätzlich ein solches sein, welches ebenfalls gute, möglichst sehr gute Dämmeigenschaften aufweist.

In der Praxis muss jedoch damit gerechnet werden, dass das die Zwischenschichten bildende in sich nachgiebige Material nicht ebenso gute Wärmedämmeigenschaften aufweist wie das die Schaumstoffschichten bildende Material.

Die höchste Beanspruchung des die Zwischenschichten bildenden elastischens Materials erfolgt in dem Bereich, in dem die Zwischenschichten mit den Fugen zusammenstossen. Wenn sich beispielsweise eine Kante der durch Fugen voneinander getrennten quadratischen Platten bei einer Kantenlänge von 1 m um 10 mm zusammenzieht, wird die Fuge um 10 mm breiter. Das heisst, bei durchlaufenden Schichten aus flexiblem Material muss dort ein Schichtstreifen von der Breite der Fuge, also z.B. von 100 mm Breite um 10% gedehnt werden. Eine solche Dehnung bewegt sich vielfach bereits im Bereich der Bruchdehnung des die in sich nachgiebige Zwischenschicht bildenden Materials. Um hier mit ausreichender Sicherheit die Gefahr von Brüchen zu vermeiden, wählt man daher vorteilhaft eine der Konstruktion gemäss den Fig. 6 bis 8. In diesen Figuren ist jeweils die wärmere Schaumstoffschicht mit 40 bezeichnet. Die beiden aneinanderstossenden, durch die Fuge 41 getrennten Schaumstoffplatten der kälteren Schicht sind dabei jeweils mit 42 und 43 bezeichnet.

Bei der in Fig. 6 gezeigten Konstruktion ist die in sich nachgiebige Zwischenschicht 44 längs der Fuge 41 auf deren Breite unterbrochen und das die Fuge 41 ausfüllende elastische Dämmaterial erstreckt sich auch in die Unterbrechung der in sich nachgiebigen Schicht 44 hinein. Hierbei können zwar, wie in der Zeichnung auch dargestellt, Spalte zwischen dem die Fuge 41 ausfüllenden Material und dem Material der in sich nachgiebigen Schicht 44 auftreten. Diese Spalte sind jedoch von geringer Grösse und lassen sich in ihrem Einfluss rechnerisch erfassen. Sie können normalerweise vernachlässigt werden.

Eine weitere Möglichkeit der Ausbildung der erwähnten Stossstelle ist in Fig. 7 gezeigt. Hier ist die Schicht 44 aus in sich nachgiebigem Material längs der Fugen 41 durch Spalte 45 getrennt, längs deren während der Fertigung die die in sich nachgiebige Schicht 44 bildenden Scheiben abstandslos aneinanderstossen. Ebenfalls stösst das die Fuge 41 ausfüllende elastische Material zumindest während der Montage abstandslos gegen das die in sich nachgiebige Schicht 44 bildende Material. Sowohl bei dieser Ausführungsform als auch bei der Ausführungsform gemäss Fig. 6 sind die aneinanderstossenden verschiedenen Werkstoffe nicht miteinander verklebt. Die nicht miteinander verklebten Oberflächen sind in beiden Figuren dadurch verdeutlicht, dass die entsprechenden Spalte übertrieben stark durch zwei Striche dargestellt sind.

Die in der Praxis einfachste Ausbildung der Stossstellen ist in Fig. 8 gezeigt. Hier lässt man ebenso wie bei der Konstruktion gemäss Fig. 6 die die in sich nachgiebige Zwischenschicht 44 bildenden Scheiben mit den Umfangsflächen der Dämmstoffplatten 42 und 43 bündig enden. Ebenfalls lässt man das die Fugen 41 ausfüllende elastische Material mit den der in sich nachgiebigen Zwischenschicht 44 zugewandten Oberflächen der Schaumstoffplatten 42 und 43 abschneiden. Auf diese Weise wird die Stossstelle, also genauer gesagt der Raum, der sowohl dem Bereich der Zwischenschicht als auch dem Bereich der Fugen 41 angehört, ausgespart. Dieser Raum wird während der Montage vorteilhaft mit Mineralwolle ausgefüllt, die unter geringem Druck eingebracht sein kann.

Ausführungen der Stossstelle gemäss Fig. 6 bis 8 zeichnen sich gegenüber einer einfachen durchlaufenden Ausführung dieser Stossstelle durch erheblich verringerte Spannungen aus.

**Patentansprüche**

1. Wärmedämmung für grosse Temperaturintervalle bei niedrigen Temperaturen aus mehreren Schaumstoffschichten (3, 4), von denen wenigstens die kälteste (4) aus einer Mehrzahl von durch mit elastischem Isoliermaterial ausgefüllte Fugen (6) voneinander getrennten Platten besteht, und mit der benachbarten Schaumstoffschicht (3) stoffschlüssig verbunden ist, dadurch gekennzeichnet, dass sich wenigstens zwischen den beiden kältesten Schaumstoffschichten (3, 4; 12, 13; 22, 24) eine mit diesen beiden Schichten stoffschlüssig verbundene Zwischenschicht (8; 16, 17; 26) aus in sich nachgiebigem Material erstreckt, welche nur geringe Schubspannungen auf die benachbarte Schaumstoffschicht (3) überträgt.

2. Wärmedämmung nach Anspruch 1, dadurch gekennzeichnet, dass sich die Zwischenschicht (8) lediglich zwischen den beiden kältesten Schaumstoffschichten (3, 4) erstreckt.

3. Wärmedämmung nach Anspruch 1 oder 2, dadurch gekennzeichnet, dass die Schaumstoffschichten (3, 4; 12, 13; 22, 24) aus verschäumtem Kunststoff, insbesondere verschäumtem Polystyrol oder – wie das bevorzugt wird – aus Polyurethanschaum bestehen.

4. Wärmedämmung nach Anspruch 1, 2 oder 3, dadurch gekennzeichnet, dass die in sich nachgiebige Zwischenschicht (8; 16, 17; 26) aus Kunststoffweichschaum, besteht, der auch bei tiefen Temperaturen noch flexibel ist, z.B. aus elastifiziertem Polystyrolschaum oder Silikonschaum.

5. Wärmedämmung nach Anspruch 4, dadurch gekennzeichnet, dass die in sich nachgiebige Zwischenschicht (8; 16, 17; 26) mit den Schaumstoffschichten (3, 4; 12, 13; 22, 24) verklebt sind.

6. Wärmedämmung nach einem der Ansprüche 1 bis 5, dadurch gekennzeichnet, dass die in sich nachgiebige Zwischenschicht aus einzelnen Stücken besteht, die sich jeweils in Form und Anordnung mit den einzelnen Platten der kälteren der durch die Zwischenschicht verbundenen Schichten decken.

7. Wärmedämmung nach Anspruch 6, dadurch gekennzeichnet, dass die einzelnen Stücke die Form von längs der Ränder der einzelnen Platten (30) verlaufenden Rahmen (31) haben.

8. Wärmedämmung nach einem der Ansprüche 1 bis 7, dadurch gekennzeichnet, dass die Dicke der in sich nachgiebigen Zwischenschicht (8; 16, 17; 26) etwa 5 bis 10% der Gesamtdicke der beiden durch die Zwischenschicht verbundenen Schaumstoffschichten (3, 4; 12, 13; 22, 24) beträgt.

9. Wärmedämmung nach einem der Ansprüche 1 bis 8, dadurch gekennzeichnet, dass die kältere (4; 12; 24) der durch die Zwischenschicht verbundenen Schaumstoffschichten dicker ist als die wärmere (3; 13; 22).

10. Wärmedämmung nach einem der Ansprüche 1 bis 9, dadurch gekennzeichnet, dass die dünnere (3; 11, 22) der beiden verbundenen Schichten keine ausgefüllten Fugen (7) aufweist.

11. Wärmedämmung nach einem der Ansprüche 1 bis 10, dadurch gekennzeichnet, dass die dünnere Schicht (3, 11) mit der zu isolierenden wärmeren festen Oberflächen (1; 10) verklebt ist.

12. Wärmedämmung nach einem der Ansprüche 1 bis 10, dadurch gekennzeichnet, dass die zu isolierende kältere Oberfläche (20) mit der Wärmedämmung unter Zwischenlage einer Zwischenschicht (23) aus in sich nachgiebigem Material verklebt ist, das nur wenig Schubspannungen überträgt.

13. Wärmedämmung nach einem der Ansprüche 1 bis 12, dadurch gekennzeichnet, dass an den Stossstellen zwischen den Fugen (41) und der Zwischenschicht (44) weder das Fugenfüllmaterial (41) mit der Zwischenschicht (44) noch die dort aneinanderstossenden Teile (44) der Zwischenschicht miteinander verbunden sind (Fig. 7 bis 8).

14. Wärmedämmung nach einem der Ansprüche 1 bis 13, dadurch gekennzeichnet, dass die Breite der Fugen erheblich grösser ist als die Dicke der Zwischenschicht, vorzugsweise in der Grössenordnung des Vierfachen der Dicke der Zwischenschicht liegt.

**Claims**

1. Thermal insulation for large temperature ranges at low temperatures consisting of a plurality of layers (3, 4) of foam material, of which at least the coldest (4) consists of a plurality of panels separated from one another by joints (6) filled with resilient insulating material and is intimately connected to the adjacent layer (3) of foam material, characterised in that extending at least between the two coldest layers of foam material (3, 4; 12, 13; 22, 24) is an intermediate layer (8; 16, 17; 26) which is intimately connected to these two layers and consists of an inherently flexible material which transmits only slight shearing stresses to the adjacent layer (3) of foam material.

2. Thermal insulation according to Claim 1, characterised in that the intermediate layer (8) extends only between the two coldest layers (3, 4) of foam material.

3. Thermal insulation according to Claim 1 or 2, characterised in that the layers (3, 4; 12, 13; 22, 24) of foam material consist of foamed plastics material, particularly foamed polystyrene or – as preferred – of polyurethane foam.

4. Thermal insulation according to Claim 1, 2 or 3, characterised in that the inherently flexible intermediate layer (8; 16, 17; 26) consists of soft plastics foam which is still flexible even at low temperatures, for example of elasticized polystyrene foam or silicone foam.

5. Thermal insulation according to Claim 4, characterised in that the inherently flexible intermediate layer (8; 16, 17; 26) is bonded to the layers (3, 4; 12, 13; 22, 24) of foam material.

6. Thermal insulation according to one of the Claims 1 to 5, characterised in that the inherently flexible intermediate layer consists of individual pieces which each coincide, in shape and arrangement, with the individual panels of the colder of the layers connected by the intermediate layer.

7. Thermal insulation according to Claim 6, characterised in that the individual pieces have the shape of frames (31) extending along the edges of the individual panels (30).

8. Thermal insulation according to one of the Claims 1 to 7, characterised in that the thickness of the inherently flexible intermediate layer (8; 16; 17; 26) is about 5 to 10% of the total thickness of the two layers (3, 4; 12, 13; 22, 24) of foam material connected by the intermediate layer.

9. Thermal insulation according to one of the Claims 1 to 8, characterised in that the colder (4; 12; 24) of the layers of foam material connected by the intermediate layer is thicker than the warmer (3; 13; 22).

10. Thermal insulation according to one of the Claims 1 to 9, characterised in that the thinner (3; 11, 22) of the two connected layers does not comprise any filled-in joints (7).

11. Thermal insulation according to any one of the Claims 1 to 10, characterised in that the thinner layer (3, 11) is bonded to the warmer solid surfaces (1; 10) to be insulated.

12. Thermal insulation according to one of the Claims 1 to 10, characterised in that the colder surface (20) to be insulated is bonded to the thermal insulation with the interposition of an intermediate layer (23) of inherently flexible material which transmits only little shearing stress.

13. Thermal insulation according to one of the Claims 1 to 12, characterised in that at the contact points between the joints (41) and the intermediate layer (44), neither is the joint filling material (41) connected to the intermediate layer (44) nor are the parts (44) of the intermediate layer meeting there connected to one another (Fig. 7–8).

14. Thermal insulation according to one of the Claims 1 to 13, characterised in that the width of the joints is considerably greater than the thickness of the intermediate layer and is preferably in the order of magnitude of four times the thickness of the intermediate layer.


**Revendications**

1. Isolant thermique pour de grands intervalles de température, dans le cas de faibles températures, qui se compose de plusieurs couches de matière expansée (3, 4), dont la plus froide (4), au moins, est formée d'une série de plaques séparées l'une de l'autre par des joints (6) remplis de matière isolante élastique et est fixée à la couche de matière expansée voisine (3) par une fermeture de matière, caractérisé en ce qu'au moins entre les deux couches de matière expansée les plus froides (3, 4; 12, 13; 22, 24) il est prévu une couche intermédiaire (8; 16, 17; 26) de matière pouvant se donner par elle-même, qui est fixée aux deux couches précitées de façon que les matières se rejoignent, couche intermédiaire qui ne transmet que de faibles tensions de cisaillement à la couche de matière expansée voisine (3).

2. Isolant thermique suivant la revendication 1, caractérisé en ce que la couche intermédiaire (8) ne se trouve qu'entre les deux couches de matière expansée les plus froides (3, 4).

3. Isolant thermique suivant l'une ou l'autre des revendications 1 et 2; caractérisé en ce que les couches de matière expansée (3, 4; 12, 13; 22, 24) sont faites de matière synthétique expansée, en particulier de polystyrène expansé ou – ce qui est préférable – de mousse de polyuréthanne.

4. Isolant thermique suivant l'une quelconque des revendications 1, 2, et 3, caractérisé en ce que la couche intermédiaire pouvant se donner par elle-même (8; 16, 17; 26) est faite d'une mousse molle de matière synthétique qui est encore flexible aux basses températures, par exemple de mousse de polystyrène élastifiée ou de mousse de silicone élastifiée.

5. Isolant thermique suivant la revendication 4, caractérisé en ce que la couche intermédiaire pouvant se donner par elle-même (8, 16, 17; 26) est fixée par collage aux couches de matière expansée (3, 4; 12, 13; 22, 24).

6. Isolant thermique suivant l'une quelconque des revendications 1 à 5, caractérisé en ce que la couche intermédiaire pouvant se donner par elle-même se compose de différentes parties qui sont couvertes, par la forme et par la disposition, par les différentes plaques des plus froides des couches fixées par la couche intermédiaire.

7. Isolant thermique suivant la revendication 6, caractérisé en ce que les différentes parties précitées se présentent sous la forme de cadres (31) qui longent les bords des différentes plaques (30).

8. Isolant thermique suivant l'une quelconque des revendications 1 à 7, caractérisé en ce que l'épaisseur de la couche intermédiaire pouvant se donner par elle-même (8; 16, 17; 26) correspond approximativement à 5 à 10% de l'épaisseur totale des deux couches de matière expansée (3, 4; 12, 13; 22, 24) reliées l'une à l'autre par la couche intermédiaire.

9. Isolant thermique suivant l'une quelconque des revendications 1 à 8, caractérisé en ce que la plus froide (4; 12; 24) des couches de matière expansée reliée l'une à l'autre par la couche intermédiaire est plus épaisse que la plus chaude (3, 13, 22) de ces couches de matière expansée.

10. Isolant thermique suivant l'une quelconque des revendications 1 à 9, caractérisé en ce que la plus mince (3; 11; 22) des deux couches reliées l'une à l'autre ne présente pas de joints remplis (7).

11. Isolant thermique suivant l'une quelconque des revendications 1 à 10, caractérisé en ce que la couche la plus mince (3; 11) est fixée par collage à la surface solide plus chaude à isoler (1; 10).

12. Isolant thermique suivant l'une quelconque des revendications 1 à 10, caractérisé en ce que la surface plus froide à isoler (20) est fixée par collage à l'isolant thermique avec interposition d'une couche intermédiaire (23) faite d'une matière pouvant se donner qui ne transmet que peu de tensions de cisaillement.

13. Isolant thermique suivant l'une quelconque des revendications 1 à 12, caractérisé en ce qu'aux endroits de jonction se présentant entre les joints (41) et la couche intermédiaire (44), ni la matière de remplissage des joints (41) n'est fixée à la couche intermédiaire (44) ni les parties (44) de la couche intermédiaire se rejoignant en cet endroit ne sont fixées l'une à l'autre (figs 7–8).

14. Isolant thermique suivant l'une quelconque des revendications 1 à 13, caractérisé en ce que la largeur des joints est nettement supérieure à l'épaisseur de la couche intermédiaire et est avantageusement de l'order de grandeur du quadruple de l'épaisseur de la couche intermédiaire.

## Fig. 1

## Fig. 2

*Fig. 3*

15  14  K  13  16  12

11  W  17  10

*Fig. 4*

25  23  K  24  21  24  20

27  26  W  22  28

*Fig. 5*

30

31

**Fig. 6**

42    41    43

44    40    44

**Fig. 7**

42    41    43

44    45    40    44

41

42    43

44    40    44

**Fig. 8**